# FASCICULE DE BREVET EUROPEEN

(11) **EP 2 864 181 B1**
(45) Date de publication et mention de la délivrance du brevet: **20.07.2016**
(21) Numéro de dépôt: 13723855.6
(22) Date de dépôt: 23.04.2013
(51) Int. Cl.: B62D 3/12, F16H 55/28

(54) **POUSSOIR À EXCENTRIQUE AVEC COMPENSATION DE JEU POUR DIRECTION DE VÉHICULE AUTOMOBILE**
EXZENTRISCHER STÖSSEL MIT RÜCKSCHLAGKOMPENSIERUNG FÜR DAS LENKSYSTEM EINES KRAFTFAHRZEUGS
ECCENTRIC YOKE WITH BACKLASH COMPENSATION FOR THE STEERING SYSTEM OF A MOTOR VEHICLE

(30) Priorité: 25.06.2012 FR 1255987
(43) Date de publication de la demande: 29.04.2015
(73) Titulaire: JTEKT Europe, 69540 Irigny (FR)
(72) Inventeur: BROCHOT, Patrice, F-69600 Oullins (FR)
(74) Mandataire: Chevalier, Renaud Philippe
(86) Numéro de dépôt international: PCT/FR2013/050898
(87) Numéro de publication internationale: WO 2014/001663

(56) Documents cités:
- WO-A1-2011/048328
- DE-C1- 19 539 864

## Description

La présente invention concerne, de façon générale, les systèmes de direction à crémaillère des véhicules automobiles. Plus particulièrement, cette invention s'intéresse au dispositif dit de « poussoir » d'un tel système de direction, dont la fonction est de maintenir la crémaillère en contact d'engrènement avec un pignon de direction, lui-même lié à une colonne de direction, en compensant les défauts des dentures et l'usure de celles-ci. Encore plus particulièrement, l'invention se rapporte à un dispositif de poussoir de type dit « à excentrique », qui est un dispositif à patin rotatif pourvu d'un mécanisme de compensation automatique du jeu entre le pignon de direction et la crémaillère.

Dans un système de direction à crémaillère, le pignon de direction est lié en rotation avec la colonne de direction, manoeuvrable à l'aide du volant de conduite du véhicule, et ce pignon vient en prise avec la crémaillère montée coulissante dans un carter de direction de forme allongée. Les deux extrémités de la crémaillère, extérieures au carter, sont accouplées à des biellettes de direction associées respectivement aux roues directrices droite et gauche du véhicule. Ainsi, la rotation du volant dans un sens ou dans l'autre est transmise par la colonne de direction au pignon de direction, et se trouve convertie en une translation correspondante de la crémaillère qui, par l'intermédiaire des biellettes de direction, provoque elle-même l'orientation coordonnée des deux roues directrices du véhicule, pour un « braquage » à droite ou à gauche.

Dans un tel système de direction, le dispositif de poussoir agit élastiquement sur le dos de la crémaillère, dans la région du pignon de direction, pour presser fortement la denture de cette crémaillère contre ledit pignon, ce qui évite tout risque de perte de contact des dentures. Le dispositif de poussoir se présente habituellement comme une « ligne poussoir », avec une pièce mobile formant patin de friction, guidée en translation et sollicitée par des moyens élastiques vers le dos de la crémaillère.

On connaît aussi les dispositifs de poussoir « à excentrique », qui remplacent le concept traditionnel de poussoir « linéaire » par un concept rotatif. Dans un tel dispositif de poussoir, il est prévu un patin rotatif de forme annulaire ou arquée qui possède une périphérie externe circulaire et une périphérie interne également circulaire mais excentrée par rapport à sa périphérie externe. Le patin rotatif est monté tournant dans le carter de direction, autour d'un axe de rotation parallèle à l'axe longitudinal de la crémaillère. La périphérie interne excentrée de ce patin est appuyée contre le dos de la crémaillère. Le patin rotatif est sollicité en rotation ou positionné angulairement de telle sorte que sa périphérie interne, appliquée contre le dos de la crémaillère, repousse cette dernière vers les dents du pignon de manière à maintenir les dentures en prise.

En particulier, le brevet français FR 2 951 797 ou son équivalent international WO 2011/048328, au nom du Demandeur, décrit un dispositif de poussoir à excentrique, tel que rappelé ci-dessus, dans lequel un mécanisme de compensation de jeu comprend un organe de poussée appuyé sur un bras radial du patin rotatif sous l'effet d'un ressort de compression inséré entre l'organe de poussée et un support fixe du patin, ou un élément solidaire dudit support. Une butée mobile, montée tournante relativement au support ou audit élément, comporte au moins une denture à dents étagées qui coopère avec au moins un cran de l'organe de poussée ou vice versa. La butée mobile est liée par l'intermédiaire d'un ressort de torsion au support ou à l'élément solidaire du support. Ainsi, le ou les crans coopèrent successivement avec les dents étagées de la ou chaque denture de la butée mobile, de manière à « rattraper » le jeu mécanique dû notamment à l'usure.

Encore plus particulièrement, dans la réalisation décrite par les documents précités, la butée mobile est pourvue, à son extrémité la plus proche du patin rotatif, d'au moins deux dentures à dents étagées, disposées en autant de secteurs dentés, telles que deux dentures diamétralement opposées occupant chacune un secteur de 180°, ces dentures coopérant avec autant de crans formés sur l'organe de poussée. Les dentures de la butée mobile, au nombre de deux au minimum, sont en théorie identiques entre elles, notamment avec des dents toutes de profil globalement triangulaire, et elles jouent ainsi toutes le même rôle, d'une manière simultanée.

En pratique toutefois, dans le cas où la butée mobile comporte ainsi plusieurs dentures, il peut se produire qu'en raison des défauts de fabrication certains secteurs dentés bloquent la rotation de la butée mobile à l'approche de la valeur de jeu maximale admise, alors qu'une autre denture voit déjà sa dent suivante s'engager sur le cran correspondant de l'organe de poussée. Ceci peut provoquer une usure anormale et prématurée des pièces du mécanisme de compensation de jeu et un fonctionnement erratique de ce mécanisme, dans lequel les contacts n'ont plus lieu sur les zones souhaitées.

La présente invention vise à éviter ces inconvénients, et elle a donc pour but de fournir un dispositif de poussoir à excentrique dont le mécanisme de compensation de jeu est perfectionné, au niveau des dentures, de manière à garantir le bon fonctionnement et la longévité de ce mécanisme et par conséquent de l'ensemble du dispositif de poussoir.

A cet effet, l'invention a pour objet un dispositif de poussoir à excentrique pour direction de véhicule automobile, le dispositif de poussoir comprenant un patin rotatif qui possède une périphérie externe et une périphérie interne excentrée par rapport à la périphérie externe, le patin rotatif étant monté tournant dans un carter de direction autour d'un axe de rotation parallèle à l'axe longitudinal de la crémaillère, la périphérie externe de ce patin étant en appui sur un berceau de forme arquée appartenant à un support monté dans le carter de direction, tandis que sa périphérie interne excentrée est appliquée contre le dos de la crémaillère, de manière à repousser celle-ci vers les dents d'un pignon de direction, ledit patin étant sollicité et/ou positionné en rotation par un mécanisme de compensation de jeu avec moyens à ressort, agissant sur un bras radial du patin rotatif, le mécanisme de compensation de jeu comprenant :
- un organe de poussée monté mobile en translation sur le support mais immobilisé en rotation par rapport à ce support et appuyé contre le bras radial du patin rotatif sous l'effet d'un ressort inséré entre cet organe de poussée et le support ou un élément solidaire du support,
- une butée mobile montée tournante relativement audit support ou audit élément,
- au moins deux dentures à dents étagées disposées sur autant de secteurs à une extrémité de la butée mobile et coopérant avec des crans formés sur l'organe de poussée, ou vice versa,
- et un ressort de torsion liant la butée mobile au support ou à l'élément solidaire du support,
de telle sorte que les crans puissent coopérer successivement avec les dents étagées des dentures,
ce dispositif de poussoir étant essentiellement caractérisé par le fait que les dentures à dents étagées comprennent sur un secteur une denture dite pilote, avec des dents de forme globalement plane mais pourvues chacune d'un relief, et au moins une denture située sur un autre secteur, avec des dents de forme globalement plane, sans relief.

Ainsi, l'idée à la base de la présente invention consiste à prévoir, sur au moins deux secteurs de la butée mobile, des dentures étagées respectives d'allure différente, à savoir une denture pilote à dents planes, mais pourvues aussi de reliefs et au moins une autre denture à dents simplement planes, sans relief ni autre particularité.

Dans un mode de réalisation de l'invention, les dents de la denture pilote présentent, par exemple sur leur bord extérieur, un relief de profil globalement triangulaire.

Les dents de la denture pilote, ainsi conformées, garantissent la valeur de jeu minimale J1 et la valeur de jeu maximale J2, telles que définies dans le brevet français FR 2 951 797 précité. Sur le ou les autres secteurs, les dents de configuration plane viennent en appui sur les crans correspondants, en même temps que les dents de la denture pilote, pour reprendre les efforts de manière convenablement repartie autour de l'axe central du mécanisme de rattrapage de jeu. Ainsi, seules les dents du secteur pilote, avec leurs reliefs, bloquent ou autorisent le déplacement de la butée mobile, provoqué par le ressort de torsion, les dentures du ou des autres secteurs ayant pour seul rôle de reprendre les efforts, ce qui évite toute action contradictoire des dentures, avec des passages de crans anormaux.

Les crans, qui coopèrent avec ces dentures, restent identiques entre eux pour tous les secteurs, et sont chacun compatibles à la fois avec les dents de la denture pilote et avec les dents de la ou des autres dentures. Ces crans peuvent être des crans simples, ou des crans doubles coopérant chacun avec deux dents successives d'une denture étagée, ce qui augmente la résistance mécanique sans diminuer le nombre d'incréments (?) de déplacement de la butée mobile.

On notera que, tout en améliorant notablement le fonctionnement du mécanisme de compensation de jeu, la solution fournie par la présente invention reste simple et économique. En particulier, cette solution a pour avantage de nécessiter la mise au point d'une seule série de dents, sur un secteur, tandis que la géométrie des autres dentures, sur les autres secteurs, se trouve simplifiée. En conséquence, la fabrication des composants du mécanisme de compensation de jeu et les opérations de mise au point d'outillages nécessaires à cette fabrication, se trouvent simplifiées.

De toute façon, l'invention sera mieux comprise à l'aide de la description qui suit, en référence au dessin schématique annexé représentant, à titre d'exemple, une forme d'exécution de ce poussoir à excentrique avec compensation de jeu pour direction de véhicule automobile.
Figure 1 est une vue extérieure d'une direction assistée électrique équipée du dispositif de poussoir à excentrique objet de la présente invention ;
Figure 2 est une vue en coupe suivant la ligne II-II de figure 1, passant par le dispositif de poussoir à excentrique ;
Figure 3 est une vue en perspective éclatée de ce dispositif de poussoir ;
Figure 4 représente, en perspective éclatée, le mécanisme de compensation de jeu du dispositif de poussoir, avec ses divers composants ;
Figure 5 est une vue en perspective de la denture pilote formée sur la butée mobile ;
Figure 6 est une vue de côté de cette denture pilote ;
Figure 7 est une vue de côté de l'autre denture formée sur la butée mobile ;
Figure 8 est une vue en perspective de l'organe de poussée avec ses crans ;
Figure 9 est une vue en coupe de l'organe de poussée, montrant un cran double de cet organe ;
Figure 10 est un schéma fonctionnel du mécanisme de compensation de jeu.

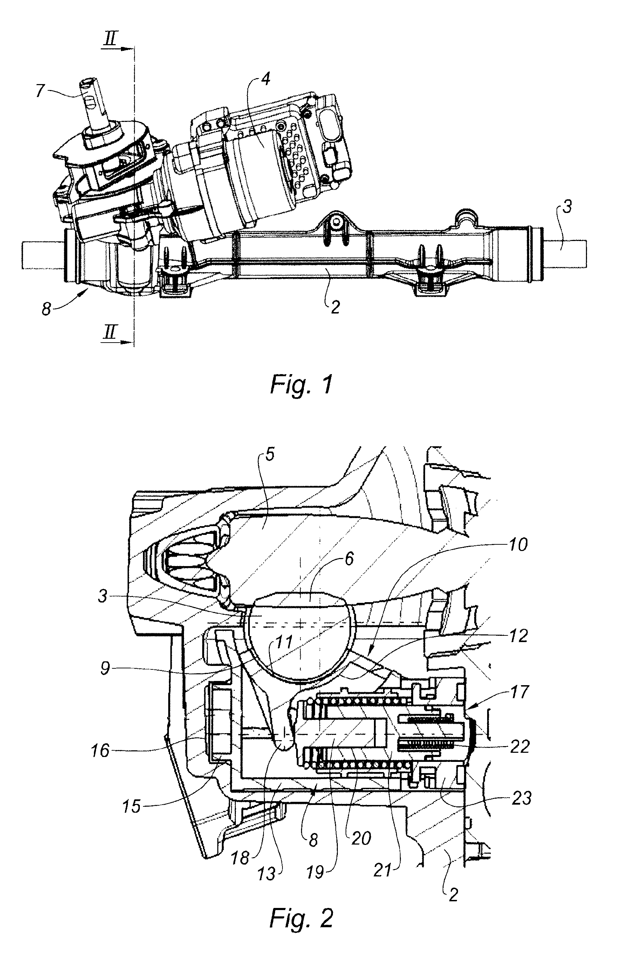

La figure 1 montre une direction assistée électrique de véhicule automobile, avec (dans le cas de cet exemple) une assistance agissant au niveau du pignon de direction. Cette direction comprend un carter de direction 2, qui s'étend suivant un axe longitudinal. Dans le carter de direction 2 est montée coulissante une crémaillère 3, dont les extrémités extérieures au carter 2 sont accouplées à des biellettes de direction (ici non représentées). Un moteur électrique d'assistance 4 est accouplé, par l'intermédiaire d'un réducteur à engrenages, à un pignon de direction 5 qui est en prise avec la denture 6 de la crémaillère 3 (voir aussi figure 2). Le pignon de direction 5 est lié à un arbre d'entrée 7, auquel est accouplée la colonne de direction (non représentée), manoeuvrée à l'aide du volant de conduite du véhicule.

Un dispositif de poussoir, désigné dans son ensemble par le repère 8, est prévu à proximité du pignon de direction 5, pour presser la denture 6 de la crémaillère 3 contre le pignon de direction 5, le dispositif de poussoir 8 étant représenté en détail sur les figures 2 et suivantes.

Le dispositif de poussoir 8 est placé du côté du dos 9 de la crémaillère 3, autrement dit à l'opposé de la denture 6 de cette crémaillère 3 et aussi à l'opposé du pignon de direction 5, ce dispositif de poussoir 8 étant logé dans une partie correspondante du carter de direction 2.

Le dispositif de poussoir 8, du type dit « à excentrique », comprend un patin rotatif 10, qui est une pièce de profil arrondi et, plus particulièrement, une pièce arquée qui possède une forme « en coin ». Le patin rotatif 10 présente une périphérie interne 11 de profil en arc de cercle qui est excentrée par rapport à sa périphérie externe 12, elle aussi de profil en arc de cercle. La périphérie interne 11 excentrée du patin rotatif 10 forme une portée appliquée contre le dos 9 de la crémaillère 3, de manière à repousser la denture 6 de cette crémaillère 3 contre les dents du pignon de direction 5.

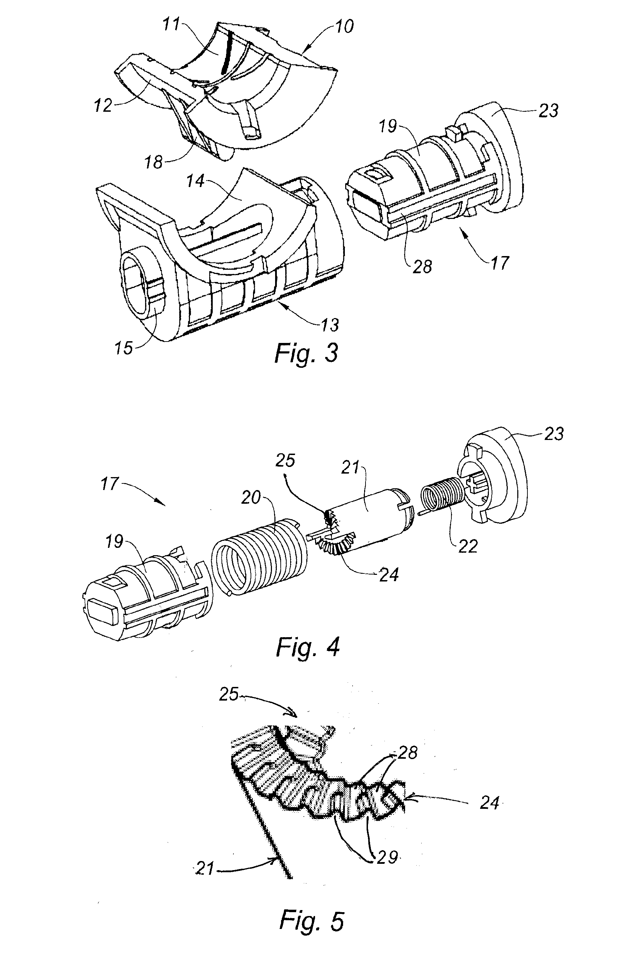

Le patin rotatif 10 est monté et guidé sur une pièce de support 13, elle-même montée dans la région concernée du carter de direction 2, la configuration de la pièce de support 13 étant bien visible sur la figure 3. Cette pièce de support 13 comporte un berceau 14 de forme arquée, sur lequel prend appui de façon glissante la périphérie externe 12 du patin rotatif 10. A une extrémité, la pièce de support 13 présente une excroissance 15 de forme oblongue, engagée dans un évidement correspondant 16 du carter de direction 2 (voir aussi figure 2).

Le patin rotatif 10 est mis en rotation par rapport à la pièce de support 13 par application d'une poussée, exercée par un mécanisme de compensation de jeu 17 sur un bras radial 18 que comporte le patin rotatif 10. Le mécanisme de compensation de jeu 17, visible sur les figures 4 et suivantes, comprend principalement un organe de poussée 19, un ressort de compression 20, une butée mobile 21, un ressort de torsion 22 et un élément d'appui 23.

L'organe de poussée 19, de forme générale cylindrique, est guidé en translation et immobilisé en rotation sur la pièce de support 13. Cet organe de poussée 19 est appliqué contre le bras radial 18 du patin rotatif 10 sous l'effort du ressort de compression 20, lequel est inséré entre l'organe de poussée 19 et l'élément d'appui 23, lui-même solidaire de la pièce de support 13.

La butée mobile 21 est une pièce de forme générale cylindrique, évidée en son centre, qui est montée tournante relativement à l'élément d'appui 23. Le ressort de torsion 22, logé dans l'évidement central de la butée mobile 21, relie cette butée mobile 21 à l'élément d'appui 23, en sollicitant ladite butée mobile 21 en rotation dans un sens prédéfini.

La butée mobile 21 est pourvue, à son extrémité la plus éloignée de l'élément d'appui 23 donc la plus proche du patin rotatif 10, de deux dentures 24 et 25 à dents étagées, réparties sur sa circonférence selon deux secteurs opposés de 180° chacun. Les deux dentures 24 et 25 de la butée mobile 21 coopèrent respectivement avec deux crans 26 et 27 diamétralement opposés, formés à une extrémité de l'organe de poussée 19. Sous l'effet du ressort de torsion 22, les deux crans 26 et 27 coopèrent successivement avec les dents étagées des deux dentures 24 et 25, au fur et à mesure de l'usure.

Selon l'invention, les deux dentures 24 et 25 à dents étagées de la butée mobile 21 possèdent des configurations différentes, comme l'illustrent les figures 5 à 7.

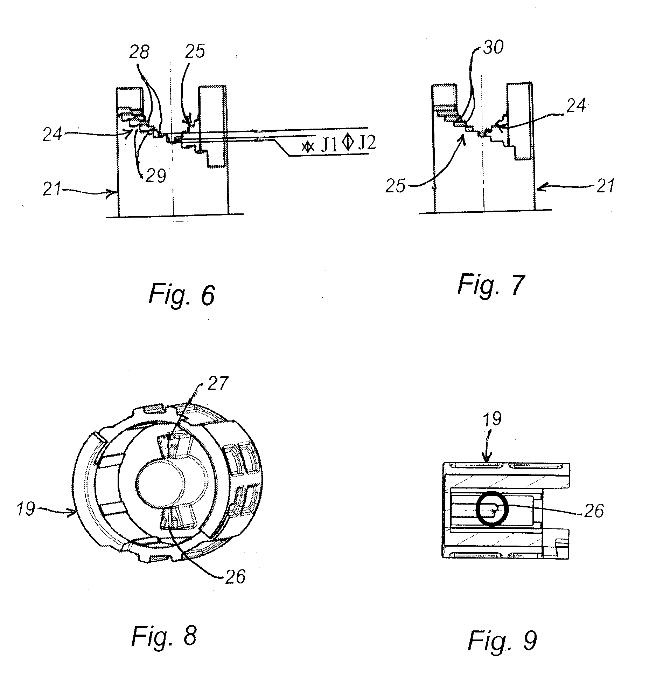

La denture 24, dite denture pilote, possède des dents 28 étagées de forme globalement plane, complétée pour chaque dent 28 par un relief 29 de profil globalement triangulaire, formé sur le bord extérieur de cette denture 24 - voir figures 5 et 6.

L'autre denture 25 possède des dents 30 étagées de forme globalement plane, similaires aux dents 28 de la denture pilote 24 mais dépourvues de tout relief - voir figure 7.

Comme le montrent les figures 8 et surtout 9, les deux crans 26 et 27 de l'organe de poussée 19 sont avantageusement des crans doubles, c'est-à-dire des crans qui présentent chacun deux zones décalées axialement de manière à pouvoir coopérer avec deux dents 28 ou 30 successives de la denture pilote 24 ou de l'autre denture 25. Les deux crans 26 et 27 sont ici identiques l'un à l'autre, contrairement aux deux dentures 24 et 25.

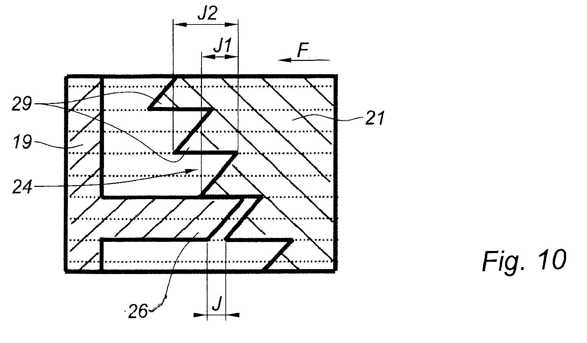

En fonctionnement courant, comme l'illustre schématiquement la figure 10, le mécanisme de compensation de jeu 17 se trouve dans une configuration telle que chaque cran 26 ou 27 de l'organe de poussée 19 est en contact contre une paroi d'une dent 28 ou 30 de la denture 24 ou 25 de la butée mobile 21. La poussée F du ressort de compression 20 s'exerce sur l'organe de poussée 19, qui la transmet lui-même au bras radial 18 du patin rotatif 10, de sorte que la crémaillère 3 soit maintenue en contact avec le pignon de direction 5. Cet état de fonctionnement est maintenu pour toute valeur de jeu J comprise entre une valeur de jeu minimale J1 et une valeur de jeu maximale J2.

Les dents étagées 28 de la denture pilote 24, et en particulier les reliefs 29 de ces dents 28, ont une forme et des dimensions qui garantissent la valeur de jeu minimale J1 et la valeur de jeu maximale J2. Ainsi, la distance (mesurée axialement) entre le sommet d'un relief 29 et la surface plane de la dent 28 correspondante correspond à la valeur de jeu minimale J1. La distance (mesurée axialement) entre la surface plane d'une dent 28 et le sommet du relief 29 de la dent 28 suivante correspond à la valeur de jeu maximale J2.

En fonctionnement, seule la denture pilote 24 contrôle, par les reliefs 29 de ses dents 28, le passage des crans 26 et 27 sur les dents suivantes, donc le déplacement de la butée mobile 21, lorsque le jeu J dépasse la valeur de jeu maximale J2. Les dents 30 de forme plane de l'autre denture 25 viennent en appui en même temps que les dents 28 de la denture pilote 24, pour répartir et reprendre la charge, sans intervenir dans le contrôle du déplacement de la butée mobile 21.

Comme il va de soi, l'invention ne se limite pas à la seule forme d'exécution de ce poussoir à excentrique avec compensation de jeu qui a été décrite ci-dessus, à titre d'exemple ; elle en embrasse, au contraire, toutes les variantes de réalisation et d'application relevant du même principe. C'est ainsi, notamment, que l'on ne s'éloignerait pas du cadre de l'invention :
- en modifiant les formes de détail, en particulier celles des reliefs des dents de la denture pilote ;
- en multipliant le nombre des dentures étagées autres que la denture pilote, toutes les dentures étant réparties sur la circonférence de la butée mobile selon des secteurs correspondants ;
- en inversant les rôles de l'organe de poussée et de la butée mobile, c'est-à-dire en formant les dentures étagées sur l'organe de poussée et les crans sur la butée mobile ;
- en destinant le même poussoir à excentrique à des systèmes de direction de tous types : directions manuelles, directions assistées électriques, directions assistées hydrauliques, avec assistance pouvant agir en divers points du système de direction.

## Revendications

1. Dispositif de poussoir à excentrique pour direction de véhicule automobile, le dispositif de poussoir comprenant un patin rotatif (10) qui possède une périphérie externe (12) et une périphérie interne (11) excentrée par rapport à la périphérie externe, le patin rotatif étant monté tournant dans un carter de direction (2) autour d'un axe de rotation parallèle à l'axe longitudinal de la crémaillère (3), la périphérie externe de ce patin étant en appui sur un berceau (14) de forme arquée appartenant à un support (13) monté dans le carter de direction, tandis que sa périphérie interne excentrée est appliquée contre le dos (9) de la crémaillère, de manière à repousser celle-ci vers les dents d'un pignon de direction (5), ledit patin étant sollicité et/ou positionné en rotation par un mécanisme de compensation de jeu (17) avec moyens à ressort, agissant sur un bras radial (18) du patin rotatif, le mécanisme de compensation de jeu comprenant :
- un organe de poussée (19) monté mobile en translation sur le support mais immobilisé en rotation par rapport à ce support et appuyé contre le bras radial du patin rotatif sous l'effet d'un ressort (20) inséré entre cet organe de poussée et le support ou un élément (23) solidaire du support,
- une butée mobile (21) montée tournante relativement audit support ou audit élément,
- au moins deux dentures (24,25) à dents étagées (28, 30) disposées sur autant de secteurs à une extrémité de la butée mobile et coopérant avec des crans (26, 27) formés sur l'organe de poussée, ou vice versa,
- et un ressort de torsion (22) liant la butée mobile au support ou à l'élément solidaire du support,
de telle sorte que les crans puissent coopérer successivement avec les dents étagées des dentures,
**caractérisé en ce que** les dentures à dents étagées comprennent sur un secteur une denture dite pilote (24), avec des dents (28) de forme globalement plane mais pourvues chacune d'un relief (29), et au moins une denture (25) située sur un autre secteur, avec des dents (30) de forme globalement plane, sans relief.

2. Dispositif de poussoir à excentrique selon la revendication 1, **caractérisé en ce que** les dents (28) de la denture pilote (24) présentent, par exemple sur leur bord extérieur, un relief (29) de profil globalement triangulaire.

3. Dispositif de poussoir à excentrique selon la revendication 1 ou 2, **caractérisé en ce que** les crans (26, 27), qui coopèrent avec les dentures étagées (24, 25), sont des crans doubles, coopérant chacun avec deux dents (28, 30) successives d'une denture étagée (24, 25).

## Patentansprüche

1. Stößelvorrichtung mit Exzenter für Kraftfahrzeuglenkung, wobei die Stößelvorrichtung eine Drehbacke (10) umfasst, die einen äußeren Umfang (12) und einen inneren Umfang (11), der in Bezug zu dem äußeren Umfang exzentriert ist, umfasst, wobei die Drehbacke drehend in einem Lenkungsgehäuse (2) um eine Rotationsachse parallel zu der Längsachse der Zahnstange (3) drehend montiert ist, wobei der äußere Umfang dieser Backe auf einer Aufhängung (14) mit gewölbter Form aufliegt, die zu einem Träger (13) gehört, der in das Lenkungsgehäuse montiert ist, während ihr innerer exzentrierter Umfang gegen den Rücken (9) der Zahnstange derart angelegt ist, dass er diese zu den Zähnen eines Lenkungsritzels (5) schiebt, wobei die Backe in Drehung durch einen Spielkompensationsmechanismus (17) mit Federmitteln, die auf einen radialen Arm (18) der Drehbacke einwirken, beansprucht und/oder positioniert wird, wobei der Spielkompensationsmechanismus Folgendes umfasst:
- ein Schuborgan (19), das in Verschiebung auf dem Träger beweglich montiert ist, aber in Drehung in Bezug zu diesem Träger festgestellt ist und gegen den radialen Arm der Drehbacke unter der Einwirkung einer Feder (20) anliegt, die zwischen dieses Schuborgan und den Träger oder einem Element (23), das fest mit dem Träger verbunden ist, eingefügt ist,
- einen beweglichen Anschlag (21), der in Bezug zu dem Träger oder dem Element drehend montiert ist,
- mindestens zwei Verzahnungen (24, 25) mit gestuften Zähnen (28, 30), die auf ebenso vielen Sektoren an einem Ende des beweglichen Anschlags angeordnet sind und mit Kerben (26, 27), die auf dem Schuborgan ausgebildet sind, zusammenwirken oder umgekehrt,
- und eine Torsionsfeder (22), die den beweglichen Anschlag mit dem Träger oder dem Element, das fest mit dem Träger verbunden ist, verbindet,
derart, dass die Kerben nacheinander mit den gestuften Zähnen der Verzahnungen zusammenwirken können,
**dadurch gekennzeichnet, dass** die Verzahnungen mit gestuften Zähnen eine sogenannte Pilotverzahnung (24) umfassen, mit Zähnen (28) in allgemein flacher Form, die aber jeweils mit einem Relief (29) versehen sind, und mindestens eine Verzahnung (25), die sich auf einem anderen Sektor befindet, mit Zähnen (30) mit allgemein flacher Form ohne Relief.

2. Stößelvorrichtung mit Exzenter nach Anspruch 1, **dadurch gekennzeichnet, dass** die Zähne (28) der Pilotverzahnung (24) zum Beispiel auf ihrem Außenrand ein Relief (29) mit allgemein dreieckigem Profil aufweisen.

3. Stößelvorrichtung mit Exzenter nach Anspruch 1 oder 2, **dadurch gekennzeichnet, dass** die Kerben (26, 27), die mit den gestuften Verzahnungen (24, 25) zusammenwirken, Doppelkerben sind, die jeweils mit zwei aufeinanderfolgenden Zähnen (28, 30) einer gestuften Verzahnung (24, 25) zusammenwirken.

## Claims

1. An eccentric pusher device for a motor vehicle steering, the pusher device comprising a rotating pad (10) which has an outer periphery (12) and an inner periphery (11) eccentric relative to the outer periphery, the rotating pad being rotatably mounted in a steering casing (2) about an axis of rotation parallel to the longitudinal axis of the rack (3), the outer periphery of this pad bearing on an arcuate shaped cradle (14) belonging to a support (13) mounted in the steering casing, while its eccentric inner periphery is applied against the back (9) of the rack, so as to push it back towards the teeth of a steering pinion (5), said pad being biased and/or positioned in rotation by a clearance compensation mechanism (17) with spring means, acting on a radial arm (18) of the rotating pad, the clearance compensation mechanism comprising:
- a thrust member (19) movably mounted in translation on the support but immobilized in rotation with respect to this support and pressed against the radial arm of the rotating pad under the effect of a spring (20) inserted between this thrust member and the support or an element (23) secured to the support,
- a movable stop (21) rotatably mounted relative to said support or to said element,
- at least two toothings (24, 25) with stepped teeth (28, 30) disposed on as much sectors at an end of the movable stop and cooperating with notches (26, 27) formed on the thrust member, or vice versa,
- and a torsion spring (22) connecting the movable stop to the support or to the element secured to the support,
such that the notches can successively cooperate with the stepped teeth of the toothings,
**characterized in that** the stepped teeth toothings comprise, on a sector, a toothing called driving toothing (24), with generally planar-shaped teeth (28) but each provided with a relief (29), and at least one toothing (25) located on another sector, with generally planar-shaped teeth (30), without relief.

2. The eccentric pusher device according to claim 1, **characterized in that** the teeth (28) of the driving toothing (24) have, for example on their outer edge, a relief (29) with a generally triangular profile.

3. The eccentric pusher device according to claim 1 or 2, **characterized in that** the notches (26, 27), which cooperate with the stepped toothings (24, 25), are double notches, each cooperating with two successive teeth (28, 30) of a stepped toothing (24, 25).
